# EUROPEAN PATENT APPLICATION

(11) **EP 1 961 512 A2**
(43) Date of publication of application: **27.08.2008**
(21) Application number: 08101314.6
(22) Date of filing: 06.02.2008
(51) Int. Cl.: B23H 7/20, B23H 7/06

(54) **Punch machine program generating device, recording medium storing a program for generating a punch machine program, and wire-cut electric discharge machine**

(30) Priority: 20.02.2007 JP 2007039896
(71) Applicant: FANUC LTD, Minamitsuru-gun, Yamanashi 401-0597 (JP)
(72) Inventor: Takagi, Shigetoshi c/o FANUC LTD, Minamitsuru-gun, Yamanashi 401-0597 (JP); Ogata, Toshiyuki c/o FANUC LTD, Minamitsuru-gun, Yamanashi 401-0597 (JP)
(74) Representative: Billington, Lawrence Emlyn

(57) **Abstract**

A machining program generating device and a wire-cut electric discharge machine that can shorten a machining time to machine multiple punch shapes. A distance L from one punch shape machining end position Pe to a next punch shape machining start position Ps is obtained. When the distance L is shorter than a predetermined value, the electric discharge machining is performed between the machining end position Pe and the machining start position Ps. When the distance L is equal to or longer than that a predetermined value, the wire is cut at the machining end position Pe and connected at the machining start position Ps to restart the electric discharge machining. By continuing the electric discharge machining when the distance L is shorter than the predetermined value, it is not necessary to carry out the processes of cutting and connecting the wire, and therefore the machining time is shortened.

## Description

### BACKGROUND OF THE INVENTION

### 1. Field of the Invention

The present invention relates to generation of a punch machining program to be executed by a wire-cut electric discharge machine, a medium storing a program for creating such a machining program, and a wire-cut electric discharge machine that machines punch shapes successively.

### 2. Description of Related Art

In wire-cut electric discharge machines, machining for obtaining a machined part as a punch of a portion cut out in a machining shape from a workpiece, called punch machining, and machining for obtaining a machined part as a die left over after the machining shape is cut out from the workpiece, called die machining, are known.

In punch machining, to keep the cut out machining part punch from falling a part left over after cutting is left, cut off with a wire, and the machine moved to a next machining start position, after which the wire is connected and machining begins. This process is repeated to machine a plurality of shapes successively. When the part left over from cutting is cut away, the machine moves along the machined machining shape, and as it approaches the part left over from cutting, the machine recommences electrical discharge and cuts off the part left over from cutting (see JP01-188232A).

In addition, an automatic program generating device is known that generates a program that stores a generated machining program for each of a variety of different types of articles to be machined, displays machining program graphic data and machining path data, designates an order of machining of the articles to be machined and a wire electrode connection position and a machining start position, connects the wire electrode at the connection position designated by the designated order, starts cutting in accordance with the stored program from the designated machining start position, cuts the wire electrode at the machining end position where the part left over after cutting is provided, and carries out machining in the designated order (see JP3099510B).

In the related art described above, a machining program is produced that, regardless of the distance from one machining end position to the next shape machining start position, cuts the wire at the machining end position, moves the machine to the next machining start position, and connects the wire, with machining executed in accordance with such program. The wire is always cut and always connected even when the distance from the machining end position to the next machining start position is short, which takes additional time unnecessarily and lengthens overall machining time.

### SUMMARY OF THE INVENTION

The present invention provides an automatic program generating device that generates a machining program that shortens the time from the end of machining of one punch shape to the start of machining of the next punch shape, and a medium that stores the program that generates that machining program, as well as a wire-cut electric discharge machine that can further shorten the time from the end of punch machining to the start of punch machining of the next punch shape, and a recording medium storing a program that changes a portion of the commands of the machining program so as to shorten the machining time.

A program generating device of the present invention generates a punch-machining program for successively machining a plurality of punch shapes by wire-cut electric discharge machining using a wire electrode. According to one aspect, the program generating device comprises: generating means that generates program segments for respectively machining the punch shapes based on information about the respective punch shapes and information about machining start positions and machining end positions of the respective punch shapes; calculating means that successively calculates a distance from a machining end position of one punch shape to a machining start position of a next punch shape; determining means that successively determines whether or not the calculated distance is less than a preset value; and means that generates a command to perform the machining from the machining end position of the one punch shape to the machining start position of the next punch shape when it is determined by the determining means that the calculated distance is less than the preset value, and generates a command to cut the wire electrode at the machining end position of the one punch shape, a motion command to move from the machining end position of the one punch shape to the machining start position of the next punch shape, and a wire connection command to connect the wire electrode at the machining start position of the next punch shape when it is determined by the determining means that the calculated distance is not less than the preset value.

According to another aspect, the program generating device comprises: generating means that generates program segments for respectively machining the punch shapes based on information about the respective punch shapes and information about machining start positions and machining end positions of the respective punch shapes; calculating means that successively calculates a distance from a machining end position of one punch shape to a machining start position of a next punch shape; determining means that determines whether or not the calculated distance is less than a preset value; and means that generates a command to perform the machining from the machining end position of the one punch shape to the machining start position of the next punch shape when it is determined by the determining means that the calculation distance is less than the preset value, and generates a stop command to stop at the machining end position of the one punch shape for cutting of the wire electrode, a motion command to move from the machining end position of the one punch shape to the machining start position of the next punch shape, and another stop command to stop at the machining start position of the next punch shape for connection of the wire electrode when it is determined by the determining means that the calculated distance is not less than the preset value.

A computer-readable recording medium of the present invention stores a program that generates a punch-machining program for successively machining a plurality of punch shapes by wire-cut electric discharge machining using a wire electrode. According to one aspect, the computer-readable recording medium stores the program comprising commands of: generating program segments for respectively machining the punch shapes based on information about the respective punch shapes and information about machining start positions and machining end positions of the respective punch shapes; successively calculating a distance from a machining end position of one punch shape to a machining start position of a next punch shape; successively determines whether or not the calculated distance is less than a preset value; and generating a command to perform the machining from the machining end position of the one punch shape to the machining start position of the next punch shape when it is determined by the determining means that the calculated distance is less than the preset value, and generating a command to cut the wire electrode at the machining end position of the one punch shape, a motion command to move from the machining end position of the one punch shape to the machining start position of the next punch shape, and a wire connection command to connect the wire electrode at the machining start position of the next punch shape when it is determined by the determining means that the calculated distance is not less than the preset value.

According to another aspect, the computer-readable recording medium stores the program comprising commands of: generating program segments for respectively machining the punch shapes based on information about the respective punch shapes and information about machining start positions and machining end positions of the respective punch shapes; successively calculating a distance from a machining end position of one punch shape to a machining start position of a next punch shape; determining means that determines whether or not the calculated distance is less than a preset value; and generating a command to perform the machining from the machining end position of the one punch shape to the machining start position of the next punch shape when it is determined by the determining means that the calculation distance is less than the preset value, and generating a stop command to stop at the machining end position of the one punch shape for cutting of the wire electrode, a motion command to move from the machining end position of the one punch shape to the machining start position of the next punch shape, and another stop command to stop at the machining start position of the next punch shape for connection of the wire electrode when it is determined by the determining means that the calculated distance is not less than the preset value.

According to one aspect, a wire-cut electric discharge machine of the present invention successively machines a plurality of punch shapes using a wire electrode according to a machining program including commands of cutting the wire electrode at a machining end position of one punch shape, moving from the machining end position of the one punch shape to a machining start position of a next punch shape and automatically connecting the wire electrode at the machining start position of the next punch shape. The wire-cut electric discharge machine comprises: storage means that stores the machining program; calculating means that analyzes the machining program and successively calculates a distance from a machining end position of one punch shape to a machining start position of a next punch shape; determining means that successively determines whether or not the calculated distance is less than a preset value; and means that generates and executes a machining command to perform the machining from the machining end position of the one punch shape to the machining start position of the next punch shape when it is determined by the determining means that the calculated distance is less than the preset value, and performs the cutting of the wire electrode at the machining end position of the one punch shape, the moving from the machining end position of the one punch shape to the machining start position of the next punch shape, and the automatically connecting of the wire electrode at the machining start position of the next punch shape according to the commands of the machining program when it is determined by the determining means that the calculated distance is not less than the preset value.

According to another aspect, a wire-cut electric discharge machine of the present invention successively machines a plurality of punch shapes according to a machining program including commands of stopping at a machining end position of one punch shape for cutting of the wire electrode, moving from the machining end position of the one punch shape to a machining start position of a next punch shape and stopping at the machining start position of the next punch shape for connection of the wire electrode. The wire-cut electric discharge machine comprises: storage means that stores the machining program; calculating means that analyzes the machining program and successively calculates a distance from a machining end position of one punch shape to a machining start position of a next punch shape; determining means that successively determines whether or not the calculated distance is less than a preset value; and means that generates and execute a machining command to perform machine from the machining end position of one punch shape to the machining start position of the next punch shape when it is determined by the determining means that the calculated distance is less than the preset value, and performs the stopping at the machining end position of the one punch shape, the moving from the machining end position of the one punch shape to the machining start position of the next punch shape, and the stopping at the machining start position of the next punch shape according to the commands of the machining program when it is determined by the determining means that the calculated distance is not less than the preset value.

By moving while conducting electric discharge machining when the distance from the machining end position to the next punch shape machining start position is shorter than the preset distance, the machining time can be shortened. Moreover, when the distance from one machining end position to the next machining start position is clearly shorter than the preset distance, there is no need to machine prepared holes for insertion of the wire for connection, thus making the work efficient.

### BRIEF DESCRIPTION OF THE DRAWINGS

FIG. 1 is a diagram illustrating successive machining of multiple punch machinings of a single workpiece;
FIG. 2 is a block diagram showing essential parts of a controller of a wire-cut electric discharge machine that is one embodiment of the present invention;
FIG. 3 is a flow chart illustrating an algorithm of a process of moving from one punch shape machining end position to a next punch shape machining start position in the wire-cut electric discharge machine equipped with an automatic connection device that is the first embodiment of the present invention;
FIG. 4 is a flow chart illustrating an algorithm of a process of moving from a punch shape machining end position to a next punch shape machining start position in a wire-cut electric discharge machine not equipped with an automatic connection device that is a second embodiment of the present invention;
FIG. 5 is a block diagram showing essential parts of one embodiment of a punch machining program generating device of the present invention; and
FIG. 6 is a flow chart illustrating an algorithm of a machining program generation process implemented by the punch machining program generating device according to one embodiment of the present invention.

### DETAILED DESCRIPTION

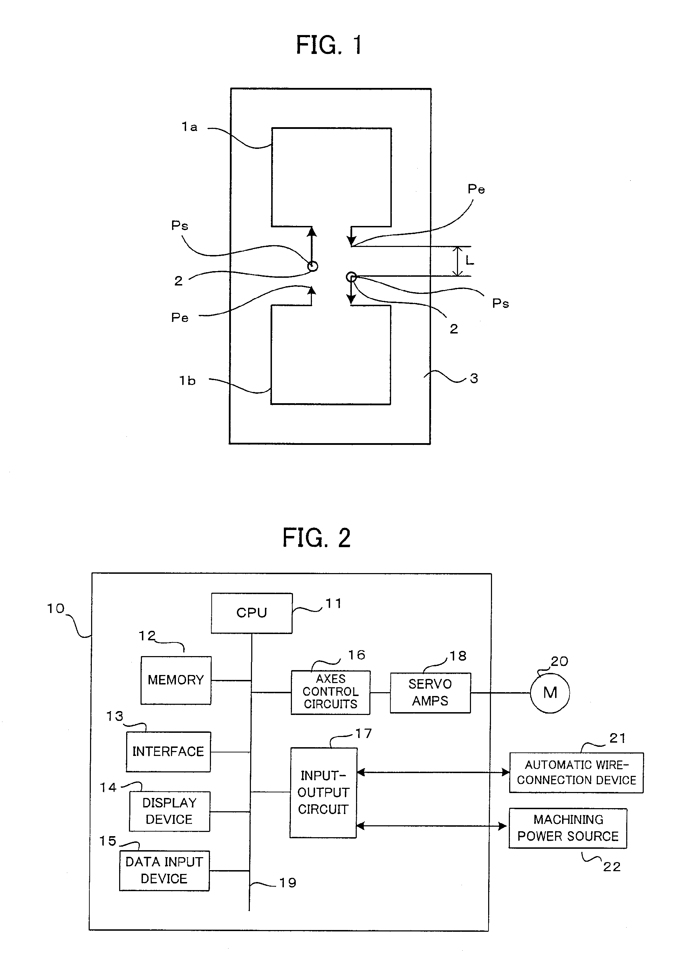

FIG. 1 is a diagram illustrating successive machining of multiple punch machinings of a single workpiece by a wire-cut electric discharge machine. In the example shown in FIG. 1, an example is shown of cut-out machining of a first punch shape 1a followed by cut-out machining of a second punch shape 1b, in a workpiece 3.

In the workpiece 3 to be machined, prepared holes 2 for inserting wire are machined at each of machining start positions Ps of the first and second punch shapes 1a, 1b. In conventional machining, first, a wire is threaded through the prepared hole 2 machined at the fist punch shape machining start position Ps, wire-cut electric discharge machining of the first punch shape 1a is carried out as ordered by a machining program, with machining up to the first punch shape 1a machining end position Pe, at which point the wire is cut, the machine positioned at the prepared hole 2 provided at the machining start position Ps of the second punch shape 1b, the wire threaded through the prepared hole 2, and electric discharge machining of the second punch shape 1b is carried out.

When the wire-cut electric discharge machine is equipped with an automatic wire connection device, the operation of threading the prepared hole 2 described above and the operation of cutting the wire are carried out automatically by the automatic wire connection device. In a wire-cut electric discharge machine that is not equipped with an automatic wire connection device, an operator cuts and connects the wire manually.

A machining program when machining of the first and second punch shapes 1a, 1b is carried out by a wire-cut electric discharge machine equipped with an automatic wire connection device is like the "sample of machining program for machine equipped with automatic wire connection device":
"Sample of machining program for machine equipped with automatic wire connection device"
.
.
.
First punch shape machining program
M50:
G00X□Y□:
M60:
Second punch shape machining program
.
.
.

In the foregoing machining program, "M50" is a wire cut command. "G00X□Y□" is a positioning command to go to the next punch shape machining start position Ps by rapid traverse; it is a command to simply move without carrying out electric discharge machining. "M60" is a wire connection command.

Machining according to the above-described "sample of machining program for machine equipped with automatic wire connection device" involves carrying out electric discharge machining of the first punch shape 1a by a first punch shape machining program. When the first punch shape 1a machining end position Pe is reached, electric discharge machining is stopped, the wire is automatically cut by the automatic wire connection device with the "M50" command, the machine is positioned at the commanded "X_{□}Y_{□}" position, that is, the second punch shape 1b machining start position Ps by rapid traverse by the G00X□Y□ command, and the wire is automatically connected by the automatic wire connection device by the "M60" command. Then, electric discharge machining of the second punch shape 1b by a second punch shape machining program is carried out.

In the machining program, the format of the program from one punch shape machining end position Pe to the next punch shape machining start position Ps takes the form of a set command form:
M50:
G00X□Y□:
M60:

By contrast, a machining program when machining of the first and second punch shapes 1a, 1b is carried out by a wire-cut electric discharge machine not equipped with an automatic wire connection device is like the following "sample machining program for machine not equipped with automatic wire connection device":
"Sample of machining program for machine not equipped with automatic wire connection device"
.
.
.
First punch shape machining program
M01:
G00X□Y□:
M01:
Second punch shape machining program
.
.
.

In the foregoing machining program, "M01" is a stop command. The machining operation of the foregoing "Sample of machining program for automatic wire connection device-equipped machine" involves carrying out electric discharge machining of the first punch shape 1a by a first punch shape machining program. When the first punch shape 1a machining end position Pe is reached, electric discharge machining is stopped by the stop command of "M01". The operator then cuts the wire and then presses a start button. Operation is recommenced, the command "G00X□Y□" is read in, and the machine is moved to and positioned at the second punch shape 1b machining start position Ps (the commanded "X□Y□" position) by rapid traverse by the G00X□Y□ command, after which the motion is stopped by the next "M01" command. The operator then connects the wire through the prepared hole 2 and presses the start button. Operation is recommenced and electric discharge machining of the second punch shape 1b is executed according to the second punch shape machining program.

In the machining program, the format of the program from the punch shape machining end position Pe to the next punch shape machining start position Ps takes the form of a set command form:
M01:
G00X□Y□:
M01:

Thus, as described above, regardless of whether the machine is equipped with an automatic wire connection device or not, machining by the wire-cut electric discharge machine involves cutting the wire at the machining end position Pe of the first punch shape and connecting the wire after positioning the machine at the second punch shape machining start position Ps, and the machining program is also commanded to carry out these sorts of operations.

The present invention carries out the operations of cutting the wire, moving, and connecting the wire as conventionally if a distance from one machining end position Pe to the next punch shape machining start position Ps (the distance indicated by reference character L in FIG. 1) is equal to or longer than a certain preset value, but continues to execute electric discharge machining from the machining end position Pe to the next punch shape machining start position Ps and carries out electric discharge machining as is of the next punch shape if the distance is less than the certain preset value.

The above-described certain preset value that is the criteria for selecting whether to cut the wire and then connect it or continue electric discharge machining is set taking into account both the time required to continue electric discharge machining and the time required to cut the wire, move, and connect the wire. In addition, the certain preset value is set longer when operating a wire-cut electric discharge machine that is not equipped with an automatic wire connection device without human intervention such as at night or the like, so as to be able to machine a plurality of punch shapes.

FIG. 2 is a block diagram showing essential parts of a controller of a wire-cut electric discharge machine that is one embodiment of the present invention.

A controller 10 of the wire-cut electric discharge machine 10 of the present embodiment is comprised of a numerical controller, which is itself comprised of a CPU 11 and a memory 12 comprised of a ROM, A RAM, and the like and connected to the CPU 11 by a bus 19, an interface 13, a display device 14 comprised of a CRT or liquid crystal, a data input device 15 such as a keyboard or the like, axes control circuits 16 that drivingly control the servo motors of the axes, an input-output circuit 17, and servo amps 18 connected to the axes control circuits 16.

The axes control circuits 16, in the wire-cut electric discharge machine, control the position, velocity, and electrical current of the servo motors 20 that move the movable axes that in turn move the wire relative to the workpiece. The axes control circuits 16 are comprised of a CPU, a memory, and so forth, and carry out position and velocity feedback control using position and velocity feedback from position/velocity sensors, not shown, that are provided on the servo motors 20 as well as motion commands issued from the CPU 11, and further, carry out electrical current feedback control and drive the servo motors 20 via the servo amps 18.

An automatic wire-connection device 21 and a machining power source 22, and further, a peripheral device, not shown, are connected to the input-output circuit 17. In addition, the machining program is inputted via the interface 13 and stored in the memory 12. Alternatively, the machining program is generated using the display device 14 and the data input device 15, and stored in the memory 12.

The CPU 11 reads out the machining program stored in the memory 12, analyzes the commands for each block of the machining program, and, based on the results of that analysis, outputs motion commands to the axes control circuits 16 or outputs automatic wire-connection device 21 and machining power source 22 on/off commands to the input-output circuit 17. At the axes control circuits 16, position and velocity feed back control is carried out based on the motion commands from the CPU 11 and on the position and velocity feedback from the position/velocity sensors to drive and to control via the servo amps 18 the positions and the velocities of the servo motors 20 of the axes (that is, an X axis, a Y axis, and a Z axis, and further, a U axis and a V axis) that move the wire relative to the workpiece 3.

The configuration and operation of the wire-cut electric discharge machine described above are substantially identical to those of the conventional wire-cut electric discharge machine, with the difference being, as described above, an operating process when moving from one machining end position Pe to the next punch shape machining start position Ps that is different from the related art.

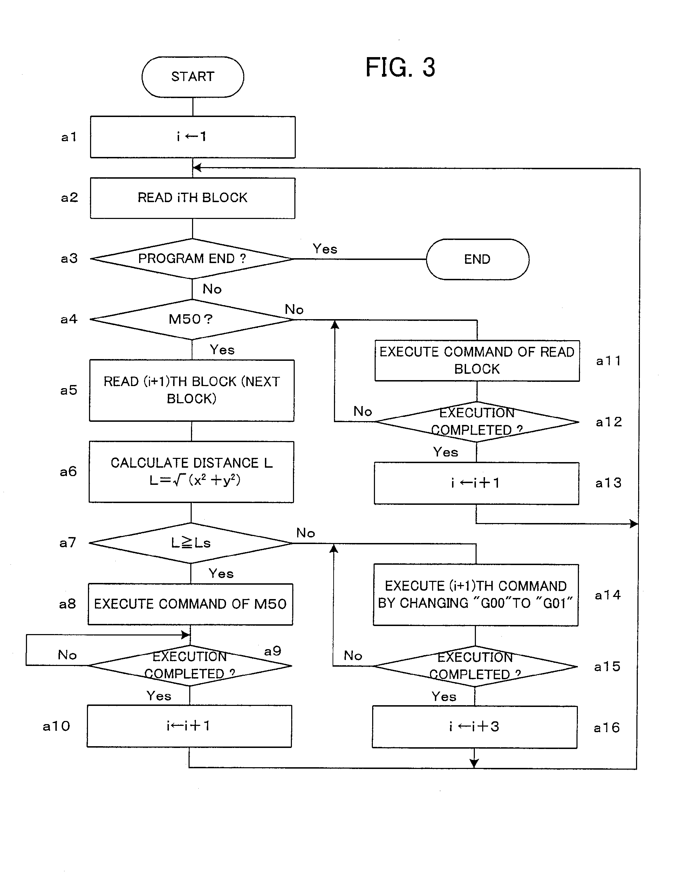

FIG. 3 is a flow chart illustrating an algorithm of a process of moving from one punch shape machining end position to the next punch shape machining start position in a wire-cut electric discharge machine equipped with the automatic wire-connection device 21 that is a first embodiment of the present invention.

In this first embodiment, a machining program like the "sample machining program for machine equipped with automatic wire connection device" described above is used.

When a machining start command is inputted, the CPU 11 of the numerical controller 10 first sets a pointer "i" designating a machining program read-out block to "1" (Step a1) and reads an i th block indicated by the pointer i from the machining program (Step a2). It is then determined if the read-out command is a program end command (Step a3) or an "M50" wire cut command (Step a4). If the read command is neither a program end command nor an wire cut command "M50", the command of the read block is executed (Step a11) and it is then determined if the execution of the command is finished (Step a12). For example, if the read-out command is a motion command, the motion command to the commanded axis is output to the axes control circuits 16 at every interpolation distribution cycle. The axes control circuits 16, on the basis of the issued motion command, then carry out position and motion feedback control and drive the servo motors 20. In addition, if the read-out block command is an "M60" wire connection command or a command for the machining power source or the peripheral device, that command is executed. Then, when the execution of the command is finished, by completion of the distribution of the commanded motion or by the end of automatic wire connection, the pointer i is incremented by "1" (Step a13) and processing then moves to Step a2.

Thereafter, so long as no "M50" wire cut command is read in, the processes of Steps a2-a4 and Steps a11-a13 are repeatedly executed. Described in terms of the above-described example of a "sample machining program for machine equipped with automatic wire connection device" and FIG. 1, the process of automatically connecting the wire through the prepared hole provided at the first punch shape machining start position is carried out, the first punch shape 1a electric discharge machining according to block commands ordering the first punch shape 1a is executed, and the processes of Steps a2-a4 and Steps a11-a13 are repeatedly executed until the first punch shape 1a machining end position is reached. Up to this point, processing is the same as that done conventionally.

When electric discharge machining up to the first punch shape 1a machining end position Pe is finished, the pointer is incremented by "1" in Step a13, the "M50" wire cut command that is the block command indicated by the pointer i is read in (Step a4), and the command for an (i+1)th block (the next block) that is 1 larger than the value of the pointer i is read out (Step a5). Since a command that positions the machine by rapid traverse at the next punch shape machining start position Ps ("G00X□Y□") is programmed into the next block after the "M50" wire cut command, this command obtains a movement distance L from one machining end position Pe to the next punch shape machining start position Ps (Step a6).

Subsequently, it is determined if the movement distance L thus obtained is equal to or longer than a certain preset value Ls (Step a7). If the movement distance L thus obtained is equal to or longer than the certain preset value Ls, that is, is long, then operation is executed according to the commands of the machining program. Specifically, the read wire cut command of "M50" is executed (Step a8), completion of the wire cutting process is awaited (Step a9), the pointer i is incremented by "1" (Step a10), and processing then returns to Step a2. Since the next command is a command positioning the machine at the next punch shape machining start position as described above, the processes of Steps a2-a4 and Steps a11-a13 are executed and the machine positioned at the next punch shape machining start position, after which the "M60" automatic wire connection command is read out and the wire is automatically connected.

By contrast, when in Step a7 the obtained movement distance L is shorter than the certain preset value Ls, a machining execution command "G01" is substituted for the rapid traverse command "G00" in the i th command "G00X□Y□", and "G01X□Y□", which is a command to perform electric discharge machining to the position "X□Y□", is issued (Step a14). As a result, electric discharge machining is carried out from one machining end position Pe to the next punch shape machining start position Ps (position "X□Y□"). When electric discharge machining up to the next punch shape machining start position Ps is completed (Step a15), the pointer "i" is incremented by "3" (Step a16) so as to skip read-out of the two blocks "G00X□Y□" (the rapid traverse command) and "M60" (the automatic wire connection command). Subsequently, processing returns to Step a2, the command for the block indicated by the pointer i is read out, and thereafter the processes of Step a3 and thereafter are executed.

Described in terms of the above-described "sample machining program for machine equipped with automatic wire connection device", for example, assume that the value for pointer i for a block that issues the command "M50" is "10". At pointer i = 10, "M50" is read out, and in Step a7, when the distance L from the machining end position Pe to the next punch shape machining start position Ps is shorter than the certain preset value Ls, in Step a14 "G00X□Y□", indicated by (i + 1) which is 1 greater than the value of the pointer i, is read out, this command is changed to the machining command "G01X□Y□" and interpreted as a motion command that carries out electric discharge machining, and electric discharge machining is conducted from the machining end position Pe to the next punch shape machining start position Ps. Then, by adding "3" to the pointer i, i = 10 + 3, two blocks of the machining program (blocks "G01X□Y□" and "M60") are skipped, and the command of the block at i = 13 (the lead block of the machining program that machines the second punch shape 1b) is read out and executed.

The above-described processes are repeatedly executed until it is determined in Step a3 that a program end has been read in, at which point the present machining process ends.

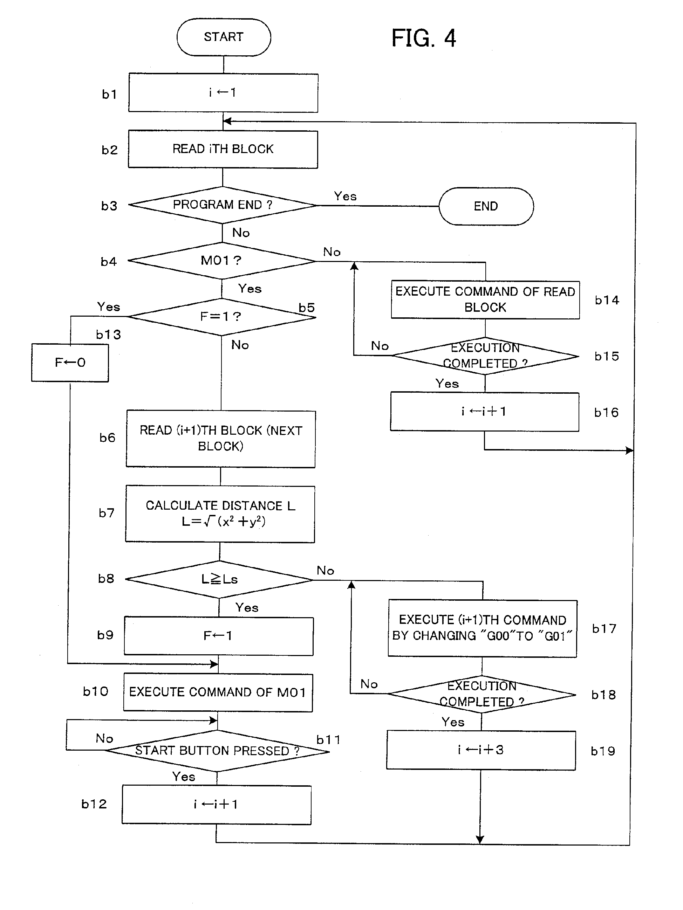

FIG. 4 is a flow chart illustrating an algorithm of a process of moving from one punch shape machining end position to a next punch shape machining start position in a wire-cut electric discharge machine not equipped with the automatic wire-connection device 21 that is a second embodiment of the present invention.

In the machining program used in the wire-cut electric discharge machine not equipped with the automatic wire-connection device 21, as indicated in the "sample machining program for machine not equipped with automatic wire connection device" described above, operation is stopped with the stop command "M01". After the operator cuts and then connects the wire, the machine awaits pressing of the start button and then recommences operation.

When a machining start command is inputted, the CPU 11 of the numerical controller 10 commences the processing shown in FIG. 4. Although the processes of Steps b1-b3 and Steps b14-b16 are the same as those of Steps a1-a3 and a11-a13 shown in FIG. 3, the process of Step b4, which involves determining whether or not the read-out block command is "M01 ", differs from the process of Step a4, which involves determining whether or not the command is "M50".

Specifically, until the stop command "M01" is read out from the machining program, the processes of Steps b2-b4 and b14-b16 are repeatedly executed, and the commands issued at each block of the machining program are executed.

Once the stop command "M01" is issued, processing then proceeds from Step b4 to Step b5 and it is determined if a flag F is "1". Since initially the initial setting of the flag F is "0", processing moves to Step b6 and the processes of Steps b6-b8, which are the same as those of Steps a5-a7 shown in FIG. 3, are carried out. Specifically, the motion command "G00X□Y□" issued at an (i + 1)th block which is 1 larger than the value of the pointer i is read out, the movement distance L to the current machining end position Pe is calculated, and it is determined if the distance L is equal to or longer than the certain preset value Ls.

If the distance L is equal to or longer than the certain preset value Ls, the flag F is set to "1" (Step b9), the stop command "M01" issued in that block is executed, and machining is stopped (Step b10), after which the machine awaits the pressing of the start button (Step b11). The operator then cuts the wire and presses the start button. When the start button is pressed, the pointer i is incremented by "1" (Step b12), processing returns to Step b2, and the processes of Steps b2 and thereafter are executed.

When in Step b8 it is determined that the movement distance L is shorter than the certain preset value Ls, the processes of Steps b17-b19, which are the same as the processes of Steps a14-a16 shown in FIG. 3, are carried out. Specifically, the rapid traverse command "G01" is substituted for "G00" in the command "G00X□Y□" indicated by (i + 1) which is one greater than the value for the pointer i, and "G01X□Y□", a machining command that conducts electric discharge machining, is issued, electric discharge machining is carried out from machining end position Pe to the next punch shape machining start position Ps (position "X□Y□"), the pointer "i" is incremented by "3", two blocks are skipped, and the third block command is read out and executed.

When the "M01" command is read out and the flag F is set to "1" in Step b9, the flag is set to "0" (Step b13) and processing moves to Step b10.

Describing the processing shown in FIG. 4 based on the above-described "sample machining program for machine not equipped with automatic wire connection device", the commands of each of the blocks in the machining program for the first punch shape are executed by repeating the processes of Steps b1-b4 and b14-b16. Once the first punch shape 1a electric discharge machining is finished and the machining end position Pe, and the next block is read out, the stop command "M01" is read out. At this point, processing moves from Step b4 to Step b5 and it is determined if the flag is set to "1". Since initially the flag is "0", "G00X□Y□" of the next block ((i+1)th block) is read out (Step b6) and the movement distance L to the next punch shape machining start position Ps, which is the positioning position (X□Y□) set by this command, is obtained (Step b7). Further, it is determined if the movement distance L is equal to or longer than the certain preset value Ls (Step b8).

When the movement distance L is equal to or longer than the certain preset value Ls, the flag F is set at "1", the stop command "M01" issued in this block is executed, and operation is stopped, after which the machine waits the pressing of the start button (Steps b10, b11). When the operator cuts the wire and presses the start button, the pointer i is incremented by "1", processing moves to Step b2, the "G00X□Y□" of the next block is read out, the command is executed, the machine is positioned at the next punch shape machining start position, which is the positioning position reached by rapid traverse as commanded, and the pointer i is incremented by "1" (Steps b1-b4, b14-b16).

Next, when the next block indicated by the pointer 1 is read, since the stop command "M01" is read out processing moves from Step b4 to Step b5. In this case, the flag F is set to "1", and therefore the flag F is set to "0" (Step b13), processing moves to Step b10, the issued "M01" command is executed and operation stopped, after which the machine awaits the pressing of the start button (Step b11). When the operator inserts the wire into the second punch shape prepared hole 2, connects the wire, and presses the start button, the CPU 11 increments the pointer i by "1" (Step b12), processing returns to Step b2, and the commands of the individual blocks of the second punch machining program are sequentially executed.

By contrast, when in Step b8 it is determined that the movement distance L is shorter than the certain preset value Ls, the machining command "G01X□Y□" is substituted for the "G00X□Y□" that is the command for the next block, such that electric discharge machining is carried out from one machining end position Pe to the next punch shape machining start position Ps (Steps b17, b18). Then, by incrementing the pointer 1 by "3", two blocks, specifically, the blocks that issue the "G00X□Y□" and "M01" commands, are skipped. The commands of the second punch shape 1b machining program are then executed from the lead block in that machining program and electric discharge machining of the second punch shape is carried out.

Thus, as described above, in a wire-cut electric discharge machine equipped with an automatic wire connection device, or in a wire-cut electric discharge machine not equipped with an automatic wire connection device, when using the same program as is used conventionally to operate the wire-cut electric discharge machine and a distance L from one machining end position Pe to the next punch shape machining start position Ps is shorter than a certain preset value Ls, electric discharge machining is continued without cutting the wire from the machining end position Pe to the next punch shape machining start position Ps, such that electric discharge machining of the second punch shape is carried out continuously with that of the first punch shape. By contrast, when the distance L from one machining end position Pe to the next punch shape machining start position Ps is equal to or longer than the certain preset value Ls, the wire is cut, the machine positioned at the next punch shape machining start position, the wire connected at that position, and the next punch shape is machined according to the machining program, such that machining according to the present invention is executed using a machining program that is used conventionally.

It should be noted that although the prepared holes 2 provided on the workpiece 3 for inserting and connecting the wire may be machined at the machining start positions for all punch shapes, when the distance L between one machining end position and the next machining start position is clearly shorter than the preset distance Ls, there is no need to machine such prepared holes. In addition, when machining with a wire-cut electric discharge machine that is not equipped with an automatic wire connection device, and when it is desirable to machine punch shapes continuously such as when operating without human intervention such as at night or the like, the preset distance Ls may be set so as to be longer than the distance L between the machining end position and machining start position of the punch shape that is to be machined so that machining does not stop between one punch shape and the next punch shape, and thus, as necessary, the certain preset value Ls can be selectively set to achieve a desired machining routine.

Next, a description is given of a punch machining program generating device of the present invention that, when moving from one punch shape electric discharge machining to the next punch shape electric discharge machining, depending on the distance from the one machining end position to the next punch shape machining start position, determines whether to continue electric discharge machining or to cut the wire, move to the next machining start position, connect the wire, and start electric discharge machining, and generates a machining program.

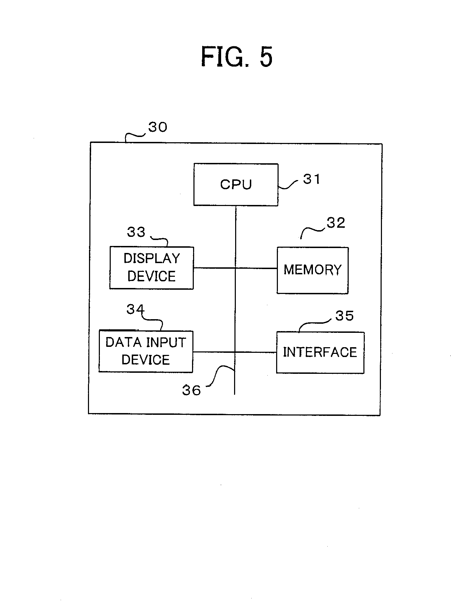

FIG. 5 is a block diagram showing essential parts of one embodiment of a punch machining program generating device of the present invention. A punch machining program generating device 30 is comprised of a conventional information processing device such as a personal computer, a numerical controller, or the like, which is in turn comprised of a CPU 31, a memory 32 comprised of a ROM, a RAM and the like connected to the CPU 31 by a bus 36, a display device 33 comprised of a CRT, liquid crystal or the like, a data input device 34 such as a keyboard to input data and commands, and an interface 35.

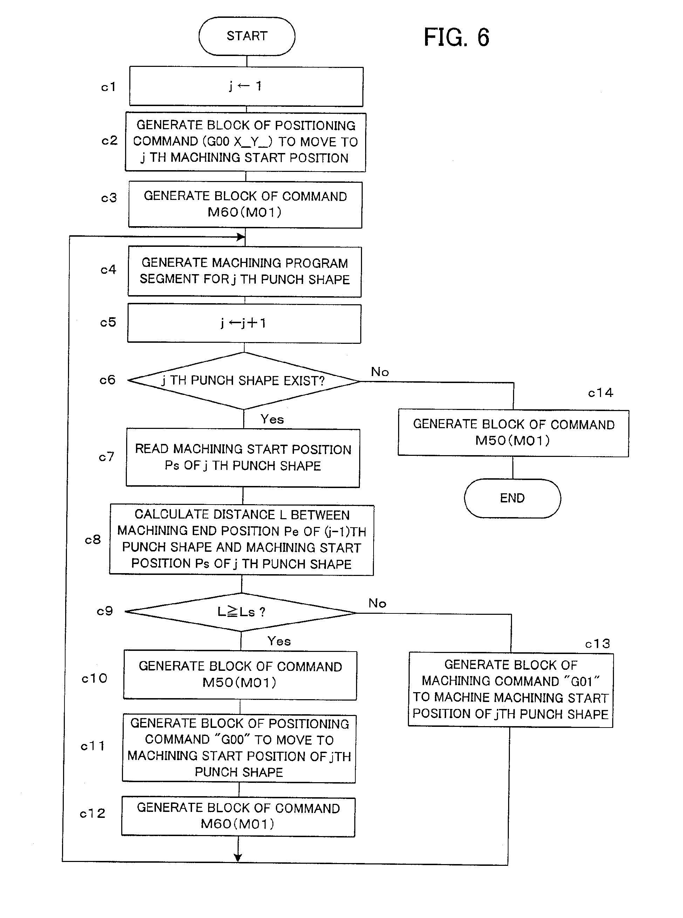

First, using the display device 33 a punch shape to be machined is defined with the data input device 34, and at the same time the punch shape machining start positions and machining end positions are inputted, and further, a machining sequence is inputted and a machining program generation command is inputted, at which point the CPU 31 commences the processing shown in FIG. 6.

FIG. 6 is a flow chart illustrating an algorithm of a machining program generation process implemented by the CPU of the present embodiment.

First, a pointer j that designates the punch shape is set to "1" (Step c1), generating a block of a positioning command to move to the machining start position Ps of a j th punch shape designated by the pointer j (G00X□Y□) (Step c2). Next, an automatic wire-connection command (M60 command) is generated. Alternatively, if a machining program for a machine not equipped with an automatic wire connection device is being generated, a stop command block (M01 command) is generated (Step c3). Next, a block of the machining program for performing electric discharge machining of the j th punch shape indicated by the value of the pointer j is generated (Step c4).

The pointer j is incremented by 1 (Step c5) and it is determined if the j th punch shape indicated by the incremented value of the pointer j is defined or not (Step c6). If the punch shape exists, a machining start position Ps of the j th punch shape is read (Step c7). A distance L from the machining end position Pe of the punch shape generated in Step c4 (punch shape j-1), which is a present position, to the machining start position Ps of the read-out j th punch shape (Step c8) is calculated, and it is determined if the calculated distance L is equal to or longer than a preset value Ls (Step c9).

If the distance L is equal to or longer than a certain preset value Ls, a block of a command to cut the wire (M50 command) is generated. Alternatively, if a machining program for a wire-cut electric discharge machine not equipped with an automatic wire connection device is being generated, a block of a stop command (M01 command) is generated (Step c10). Next, a block of a positioning command (G00X□Y□) to position the wire at the machining start position Ps of the j th punch shape by rapid traverse from the machining end position Pe of the (j-1) th punch shape, which is the present position, is generated (Step c11). Further, a block of the automatic wire-connection command (M60 command) is generated, or alternatively, if a machining program for a wire-cut electric discharge machine not equipped with an automatic wire-connection device is being generated, a block of a stop command (M01) is generated (Step c12). Then, processing returns to Step c4 and the j^{th} punch shape machining program is generated.

By contrast, if it is determined in Step c9 that the movement distance L is shorter than the certain preset value Ls, a machining command (G01X□Y□) block that moves the machine while carrying out electric discharge machining from the machining end position Pe of the j-1 punch shape that is the current position to the machining start position Ps of the j th punch shape is generated (Step c13), and processing returns to Step c4.

Thereafter, the processes of from Step c4 through Step c13 described above are repeatedly executed until it is determined in Step c6 that the j^{th} punch shape is not defined. Once it is determined in Step c6 that the punch shape is not defined, a wire cut order (M50) block is generated, or alternatively, if a machining program for a wire-cut electric discharge machine not equipped with an automatic wire connection device is being generated, a block of the stop command (M01) is generated (Step c14), and the present machining program generating process is completed.

Thus, as described above, depending on the distance between one punch shape machining end position and the next punch shape machining start position, either a machining program that moves the machine while carrying out electric discharge machining between the machining end position and the machining start position or a machining program that cuts the wire at the machining end position and connects the wire at the machining start position is selected, and a machining program is generated.

In addition, the machining program generating program may be stored on a computer-readable recording medium and the machining program generating program installed in a computer or the like from the recording medium, and whether to join an interval between the machining end position and the machining start position by moving while conducing electric discharge machining or to join the interval by cutting the wire, moving, and connecting the wire may be selected depending on the distance between the machining end position and the machining start position, and the machining program generated.

## Claims

1. A program generating device for generating a punch-machining program for successively machining a plurality of punch shapes by wire-cut electric discharge machining using a wire electrode, comprising:
generating means that generates program segments for respectively machining the punch shapes based on information about the respective punch shapes and information about machining start positions and machining end positions of the respective punch shapes;
calculating means that successively calculates a distance from a machining end position of one punch shape to a machining start position of a next punch shape;
determining means that successively determines whether or not the calculated distance is less than a preset value; and
means that generates a command to perform the machining from the machining end position of the one punch shape to the machining start position of the next punch shape when it is determined by said determining means that the calculated distance is less than the preset value, and generates a command to cut the wire electrode at the machining end position of the one punch shape, a motion command to move from the machining end position of the one punch shape to the machining start position of the next punch shape, and a wire connection command to connect the wire electrode at the machining start position of the next punch shape when it is determined by said determining means that the calculated distance is not less than the preset value.

2. A program generating device for generating a punch-machining program for successively machining a plurality of punch shapes by wire-cut electric discharge machining using a wire electrode, comprising:
generating means that generates program segments for respectively machining the punch shapes based on information about the respective punch shapes and information about machining start positions and machining end positions of the respective punch shapes;
calculating means that successively calculates a distance from a machining end position of one punch shape to a machining start position of a next punch shape;
determining means that determines whether or not the calculated distance is less than a preset value; and
means that generates a command to perform the machining from the machining end position of the one punch shape to the machining start position of the next punch shape when it is determined by said determining means that the calculation distance is less than the preset value, and generates a stop command to stop at the machining end position of the one punch shape for cutting of the wire electrode, a motion command to move from the machining end position of the one punch shape to the machining start position of the next punch shape, and another stop command to stop at the machining start position of the next punch shape for connection of the wire electrode when it is determined by said determining means that the calculated distance is not less than the preset value.

3. A computer-readable recording medium storing a program that generates a punch-machining program for successively machining a plurality of punch shapes by wire-cut electric discharge machining using a wire electrode, said computer-readable recording medium storing the program comprising commands of:
generating program segments for respectively machining the punch shapes based on information about the respective punch shapes and information about machining start positions and machining end positions of the respective punch shapes;
successively calculating a distance from a machining end position of one punch shape to a machining start position of a next punch shape;
successively determines whether or not the calculated distance is less than a preset value; and
generating a command to perform the machining from the machining end position of the one punch shape to the machining start position of the next punch shape when it is determined by said determining means that the calculated distance is less than the preset value, and generating a command to cut the wire electrode at the machining end position of the one punch shape, a motion command to move from the machining end position of the one punch shape to the machining start position of the next punch shape, and a wire connection command to connect the wire electrode at the machining start position of the next punch shape when it is determined by said determining means that the calculated distance is not less than the preset value.

4. A computer-readable recording medium storing a program that generates a punch-machining program for successively machining a plurality of punch shapes by wire-cut electric discharge machining using a wire electrode, said computer-readable recording medium storing the program comprising commands of:
generating program segments for respectively machining the punch shapes based on information about the respective punch shapes and information about machining start positions and machining end positions of the respective punch shapes;
successively calculating a distance from a machining end position of one punch shape to a machining start position of a next punch shape;
determining means that determines whether or not the calculated distance is less than a preset value; and
generating a command to perform the machining from the machining end position of the one punch shape to the machining start position of the next punch shape when it is determined by said determining means that the calculation distance is less than the preset value, and generating a stop command to stop at the machining end position of the one punch shape for cutting of the wire electrode, a motion command to move from the machining end position of the one punch shape to the machining start position of the next punch shape, and another stop command to stop at the machining start position of the next punch shape for connection of the wire electrode when it is determined by said determining means that the calculated distance is not less than the preset value.

5. A wire-cut electric discharge machine for successively machining a plurality of punch shapes using a wire electrode according to a machining program including commands of cutting the wire electrode at a machining end position of one punch shape, moving from the machining end position of the one punch shape to a machining start position of a next punch shape and automatically connecting the wire electrode at the machining start position of the next punch shape, said wire-cut electric discharge machine comprising:
storage means that stores the machining program;
calculating means that analyzes the machining program and successively calculates a distance from a machining end position of one punch shape to a machining start position of a next punch shape;
determining means that successively determines whether or not the calculated distance is less than a preset value; and
means that generates and executes a machining command to perform the machining from the machining end position of the one punch shape to the machining start position of the next punch shape when it is determined by said determining means that the calculated distance is less than the preset value, and performs the cutting of the wire electrode at the machining end position of the one punch shape, the moving from the machining end position of the one punch shape to the machining start position of the next punch shape, and the automatically connecting of the wire electrode at the machining start position of the next punch shape according to the commands of the machining program when it is determined by said determining means that the calculated distance is not less than the preset value.

6. A wire-cut electric discharge machine for successively machining a plurality of punch shapes according to a machining program including commands of stopping at a machining end position of one punch shape for cutting of the wire electrode, moving from the machining end position of the one punch shape to a machining start position of a next punch shape and stopping at the machining start position of the next punch shape for connection of the wire electrode, said wire-cut electric discharge machine comprising:
storage means that stores the machining program;
calculating means that analyzes the machining program and successively calculates a distance from a machining end position of one punch shape to a machining start position of a next punch shape;
determining means that successively determines whether or not the calculated distance is less than a preset value; and
means that generates and execute a machining command to perform machine from the machining end position of one punch shape to the machining start position of the next punch shape when it is determined by said determining means that the calculated distance is less than the preset value, and performs the stopping at the machining end position of the one punch shape, the moving from the machining end position of the one punch shape to the machining start position of the next punch shape, and the stopping at the machining start position of the next punch shape according to the commands of the machining program when it is determined by said determining means that the calculated distance is not less than the preset value.
